# EUROPÄISCHE PATENTSCHRIFT

(11) **EP 3 124 845 B1**
(45) Veröffentlichungstag und Bekanntmachung des Hinweises auf die Patenterteilung: **10.03.2021**
(21) Anmeldenummer: 16178807.0
(22) Anmeldetag: 21.11.2012
(51) Int. Cl.: F16L 11/12, F16L 33/22, B32B 1/08, F16L 21/00, F16L 11/00

(54) **GARTENSCHLAUCH UND BEWÄSSERUNGS-SCHLAUCHSYSTEM MIT EINEM SOLCHEN GARTENSCHLAUCH**
GARDEN HOSE AND HOSE IRRIGATION SYSTEM COMPRISING SAID GARDEN HOSE
TUYAU D'ARROSAGE ET SYSTÈME DE TUYAU D'IRRIGATION ÉQUIPÉ D'UN TEL TUYAU D'ARROSAGE

(30) Priorität: 21.11.2011 DE 102011055570
(43) Veröffentlichungstag der Anmeldung: 01.02.2017
(62) Teilanmeldung aus: 12794683.8
(73) Patentinhaber: Husqvarna AB, 561 82 Huskvarna (SE)
(72) Erfinder: Wenzel, Edmond, 88477 Schwendi (DE); Kreutle, Sonja, 89584 Ehingen (DE); Tatic, Aleksandar, 89075 Ulm (DE); Grossmann, Timo, 88486 Kirchberg-Sinningen (DE)
(74) Vertreter: Finkele, Rolf

(56) Entgegenhaltungen:
- EP-A1- 2 233 812
- EP-A2- 0 969 237
- DE-A1- 4 238 696
- DE-A1- 19 503 722
- DE-U1- 20 102 973
- US-A- 4 275 768
- US-A- 5 129 428
- US-B1- 6 955 189

## Beschreibung

Die Erfindung betrifft einen Gartenschlauch und ein Bewässerungs-Schlauchsystem mit einem solchen Gartenschlauch.

Gartenschläuche bestehen typischerweise im wesentlichen aus einem flexiblen thermoplastischen Kunststoffmaterial, welches insbesondere in Form von PVC (Polyvinylchlorid) kostengünstig verfügbar und für die Schlauchherstellung im Extrusionsverfahren geeignet ist.

In gebräuchlichen Bewässerungs-Schlauchsystemen sind Schlauchanschlussteile, z. B. in Form von Hahnanschlüssen, Verbindungsstücken oder Bewässerungsgeräten gegeben, welche zur Befestigung an einem Schlauchende ausgebildet sind, wobei ein Schlauchende durch eine Schnittstelle durch den Schlauch ohne gesonderte Gestaltung eines Schlauchendes gegeben ist und der Schlauch dadurch von dem Benutzer auch auf beliebige Länge gekürzt werden kann.

Für die Verbindung von Anschlussteilen mit einem Schlauchende weisen die Anschlussteile in gebräuchlicher Ausführung einen Innenstutzen, welcher in den Innenraum des Schlauchendes eingesteckt wird, und den Schlauch außen umgreifende Halteelemente, welche gegen die Außenoberfläche des Schlauchs anpressbar sind, auf. Das Anpressen der Halteelemente, welche insbesondere als quer zur Schlauchachse verschwenkbare Arme mit dem Schlauch zu weisenden Haltestrukturen ausgebildet sind, erfolgt typischerweise mittels einer den Schlauch umgreifenden Überwurfmutter mit einem konischen Abschnitt. Die Haltestrukturen sind beispielsweise als in Umfangsrichtung verlaufende Rippen ausgebildet, welche beim Anpressen an die Schlauchoberfläche diese unter Verformung des elastischen Mantelmaterials des Schlauchs eindrücken.

Es zeigt sich, dass mancher Benutzer beim Festziehen der Überwurfmutter keine ausreichende Handkraft aufwenden kann oder aus Sorge um Beschädigung des Anschlussteils aufwenden will, was zur Folge haben kann, dass die axiale Haltekraft zwischen Anschlussteil und Schlauchende zu gering ist und das Anschlussteil unter der Einwirkung des Wasserdrucks im Schlauch oder beim Ziehen des Schlauchs vom Schlauchende abrutschen kann.

Aus der Patentschrift US 4 275 768 A ist ein Gartenschlauch bekannt, bei dem das eine Reliefstruktur bildende Material auf die Außenseite einer Mantelschicht aufgebracht ist. Dieses Material ist mittels Gravur mit einer Reihe von Buchstaben versehen, wodurch das Material eine Reliefstruktur ausbildet.

Der Erfindung liegt die Aufgabe zugrunde, einen Gartenschlauch und ein Bewässerungs-Schlauchsystem mit einem solchen Gartenschlauch anzugeben, bei welchem ohne höheres Krafterfordernis und unter Erhaltung der einfachen Bedienbarkeit und einer kostengünstigen Herstellbarkeit eine verbesserte Griffigkeit des Schlauches in einer Benutzerhand und/oder zwischen einem Schlauchende und einem Anschlussteil gegeben ist.

Erfindungsgemäße Lösungen sind in den unabhängigen Ansprüchen beschrieben. Die abhängigen Ansprüche enthalten vorteilhafte Ausgestaltungen und Weiterbildungen der Erfindung.

Durch die Ausbildung einer Reliefstruktur an der Außenseite einer Mantelschicht des Schlauchs ist eine Voraussetzung für eine formschlüssige oder formschlussähnliche Verbindung eines Schlauchanschlussteils mit dem Schlauchende gegeben, so dass sich eine gegenüber gebräuchlichen Gartenschläuchen wesentlich erhöhte Haltekraft zwischen Schlauchende und Anschlussteil ergibt. Dabei können vorteilhafterweise gebräuchliche Anschlussteile mit einem solchen Gartenschlauch verbunden werden, indem die Reliefstruktur unter Berücksichtigung gebräuchlicher Haltestrukturen geformt ist. Die Reliefstruktur kann alternativ oder zusätzlich eine verbesserte Griffigkeit gegenüber einer Benutzerhand ergeben.

Als Reliefstruktur ist eine Gestaltung der Außenseite der Mantelschicht vorgesehen, welche gegenüber einem gemittelten Radius der Außenseite bezüglich der Längsachse des Schlauchs wenigstens eine radiale Erhöhung oder Vertiefung aufweist. Vorzugsweise enthält die Reliefstruktur in Längsrichtung aufeinander folgend mehrere solcher Erhöhungen und/oder Vertiefungen. Vorzugsweise enthält die Reliefstruktur eine Rippenstruktur mit in Umfangsrichtung um die Längsachse verlaufenden Rippen, wobei als Rippen auch Stege zwischen in Längsrichtung benachbarten Vertiefungen verstanden seien.

Die Reliefstruktur kann in erster vorteilhafter Ausführung unmittelbar in der Außen-Oberfläche des Schlauchs ausgebildet sein, wodurch sich ein direkter formschlüssiger Eingriff von Haltestrukturen eines Anschlussteils in die Reliefstruktur des Schlauchs ergibt.

In bevorzugter Ausführung ist die Reliefstruktur durch eine Deckschicht zumindest teilweise, vorzugsweise vollständig überdeckt, so dass die der Reliefstruktur abgewandte Seite der Deckschicht die Schlauchoberfläche oder einen Teil derselben bildet. Hierdurch kann die Schlauchoberfläche selbst durchgehend ohne Vertiefung und Erhöhung gegenüber einer Zylindermantelform ausgeführt sein, wodurch zum einen das Ansammeln von Schmutz in der Reliefstruktur vermieden wird und zum anderen insbesondere die Handhabung des Schlauchs mit entlang der Schlauchoberfläche gleitender Benutzerhand, z. B. beim Aufwickeln des Schlauchs angenehmer ist als bei durch eine Reliefstruktur unterbrochener Schlauchoberfläche. Die Deckschicht besteht dabei vorteilhafterweise aus einem gegenüber dem Material der Reliefstruktur weicheren Material, also mit geringerer Shore-Härte. Durch die geringere Shore-Härte des Materials der Deckschicht wird beim Anpressen der Haltestruktur eines Anschlussteils gegen die Schlauchoberfläche primär die Deckschicht verformt und ein teilweiser formschlüssiger Eingriff der Haltestruktur in die Reliefstruktur oder zumindest eine radiale Annäherung der Haltestruktur an die Reliefstruktur erreicht.

Die Reliefstruktur ist auf einen Teil der Außenseite der Mantelschicht beschränkt, wobei der Flächenanteil der Reliefstruktur weniger als 30 %, insbesondere weniger als 20 % an der Gesamtfläche der Außenseite der Mantelschicht beträgt.

Die Reliefstruktur umfasst in vorteilhafter Ausführung wenigstens einen in Längsrichtung verlaufenden strukturierten Streifen an der Außenseite der Mantelschicht. Der Streifen kann auch in Längsrichtung in beabstandete Streifenabschnitte unterteilt oder nur in Streifenabschnitten mit der Reliefstruktur versehen sein, so dass Längsabschnitte des Schlauchs mit und ohne Reliefstruktur in Längsrichtung abwechselnd aufeinanderfolgen.

In bevorzugter Ausführungsform sind um den Schlauchumfang verteilt mehrere solcher Streifen als Teilstrukturen der Reliefstruktur vorgesehen, wobei vorzugsweise wenigstens drei Streifen vorgesehen sind. Die mehreren Streifen sind vorzugsweise in drehsymmetrischer Anordnung um die Längsachse des Schlauchs gruppiert, wodurch sich vorteilhafterweise eine besonders gleichmäßige Belastung des Schlauchs und des Anschlussteils ergibt.

Eine Beschränkung der Reliefsstruktur auf einen Flächenanteil der Außenseite der Mantelschicht kann auch durch eine andere Flächenaufteilung, insbesondere in Form von in Längsrichtung beabstandeten Ringflächen um den Umfang der Mantelschicht, in Form eines Diagonalgitters oder in Form von in Umfangsrichtung und in Längsrichtung gegenseitig beabstandeten Inselflächen in der Außenseite der Mantelschicht als Teilstrukturen der Reliefstrukturen gegeben sein.

Die Ausführung der Teilstrukturen in Streifenform ist herstellungstechnisch von besonderem Vorteil, da die Reliefstruktur durch Strukturierung der mit glatter Mantelfläche extrudierten noch weichen Mantelschicht mittels eines Werkzeugs kurz nach der Extrusionsdüse auf einfache Weise sowohl als in Längsrichtung kontinuierliche fortgesetzte als auch in Form von in beabstandete Längsabschnitte unterteilten Teilstrukturen mit geringem Aufwand möglich ist.

Eine auf eine Teilfläche der Mantelschicht beschränkte Reliefstruktur kann in bevorzugter Ausführung aus einem Material bestehen, welches von dem Material der übrigen Mantelschicht verschieden ist und insbesondere eine gegenüber dem Material der übrigen Mantelschicht höhere Shore-Härte aufweist. Das Material der Reliefstruktur kann in der vorteilhaften Streifenform der Reliefsstruktur oder Teilstrukturen in Umfangsrichtung einen Teil der Mantelschicht bilden und hierfür in besonders vorteilhafter Weise gleichzeitig mit dem übrigen Material der Mantelschicht extrudiert werden.

In anderer vorteilhafter Ausführung kann in der äußeren Mantelschicht ein gegen die äußere Fläche dieser Mantelschicht radial vertiefter streifenförmiger Graben ausgebildet sein, in welchem ein Streifen mit der radial nach außen weisenden Reliefstruktur einliegt. Der Streifen mit der Reliefstruktur besteht dabei typischerweise aus einem Material größerer Shore-Härte als das den Streifen umgebende Material der Mantelschicht. Der Streifen mit der Reliefstruktur kann hierbei in erster vorteilhafter Ausführung den Graben in Umfangsrichtung über die gesamte Breite des Grabens ausfüllen und das härtere Material des Streifens mit der Reliefstruktur kann hierbei vorteilhafterweise in enger Materialverbindung an Grenzflächen zu dem Kontakt der übrigen Mantelschicht Grenzflächen mit enger Materialverbindung und in Umfangsrichtung mechanischer Belastbarkeit bilden. In anderer vorteilhafter Ausführung kann vorgesehen sein, dass der Streifen mit der Reliefstruktur den Graben in der Mantelschicht in Umfangsrichtung nicht über die gesamte Breite des Grabens ausfüllt und in Umfangsrichtung zwischen den Seitenwänden des Streifens mit der Reliefstruktur und den Seitenwänden des Grabens schmale Spalte verbleiben.

Bei einer Ausführung mit einem streifenförmigen Graben in der äußeren Mantelschicht und in dem Graben einliegender Reliefstruktur kann die Herstellung einer solchen Kombination einer Mantelstruktur mit streifenförmigem Graben und mit einem die Reliefstruktur tragenden Streifen auf unterschiedliche Weise erfolgen. Insbesondere kann die eine darunter liegende Schicht, insbesondere eine Zwischenschicht mit verstärkendem Gewebe, geschlossen um die Längsachse des Schlauchs umlaufende äußere Mantelschicht in einem Extrusionsschritt mit zwei getrennten Extrusionsdüsen und jeweils einem den Extrusionsdüsen zugeordneten Extruder gleichzeitig erzeugt werden. In anderer vorteilhafter Ausführung kann die äußere Mantelschicht zweilagig aufgebaut sein und die Herstellung in der Art erfolgen, dass zuerst eine erste Teilschicht der äußeren Mantelschicht als mit konstanter Schichtdicke geschlossen um die Längsachse umlaufend erzeugt wird und auf dieser ersten Teilschicht eine zweite Teilschicht erzeugt wird, in welcher der Streifen mit der Reliefstruktur in Umfangsrichtung einen Teilabschnitt dieser zweiten Teilschicht bildet.

Die Reliefstruktur weist vorzugsweise eine in Längsrichtung periodische Struktur mit aufeinander folgenden Erhöhungen und Vertiefungen auf, wobei die Periodenlänge der periodischen Struktur in erster bevorzugter Ausführung identisch sein kann mit dem Abstand aufeinander folgender Elemente von Haltestrukturen eines Anschlussteils. Hierdurch ergibt sich ein besonders tiefer Verzahnungseingriff bei gleichzeitig hoher Stabilität der Reliefstruktur.

In anderer Ausführung können die Periodenlänge der Reliefstruktur einerseits und der Haltestruktur eines Anschlussteils auch unterschiedlich sein, wodurch insbesondere auch die Verwendung von Anschlussteilen unterschiedlicher Hersteller an demselben Schlauch vereinfacht wird.

In einer durch geringe Verschmutzungsneigung besonders vorteilhafter Ausführung kann die Reliefstruktur in seitlicher Ansicht eine in Streifenlängsrichtung fortschreitende Wellenform mit gegenüber der Wellenlänge geringerer Amplitude aufweisen.

Um in besonders vorteilhafter Weise die haptischen Eigenschaften der Schlauchoberfläche zu verbessern ist es auch denkbar, die Reliefstruktur in Form eines oder mehrerer, die in Umfangsrichtung anschließenden Schlauchoberflächen um ein geringes Maß überragenden Streifen auszugestalten.

Die Erfindung ist nachfolgend anhand bevorzugter Ausführungsbeispiele unter Bezugnahme auf die Abbildungen noch eingehend veranschaulicht. Dabei zeigt:
- Fig. 1: ein Anschlussteil an einem Schlauchende,
- Fig. 2: einen Schnitt durch einen Verbindungsbereich,
- Fig. 3: die Ansicht nach Fig. 2 bei festgezogener Verbindung,
- Fig. 4: einen Schnitt durch einen Schlauch
- Fig. 5: eine zu Fig. 3 analoge Darstellung einer nicht erfindungsgemäßen Ausführungsform mit abgedeckter Reliefstruktur,
- Fig. 6: einen Schnitt durch einen Schlauch zu der Ausführung nach Fig. 5,
- Fig. 7: eine Ausführung mit gleicher Periodenlänge von Reliefstruktur und Haltestruktur eines Anschlussteils,
- Fig. 8: eine nicht erfindungsgemäße Ausführung einer aufgefüllten Reliefstruktur,
- Fig. 9: eine Ausführung mit in eine Grabenstruktur eingepaßten Reliefstreifen,
- Fig. 10: eine Ausführungsform mit gegenüber einem Reliefstreifen vergrößerter Grabenbreite,
- Fig. 11: eine Seitenansicht eines gewellten Reliefstreifens.

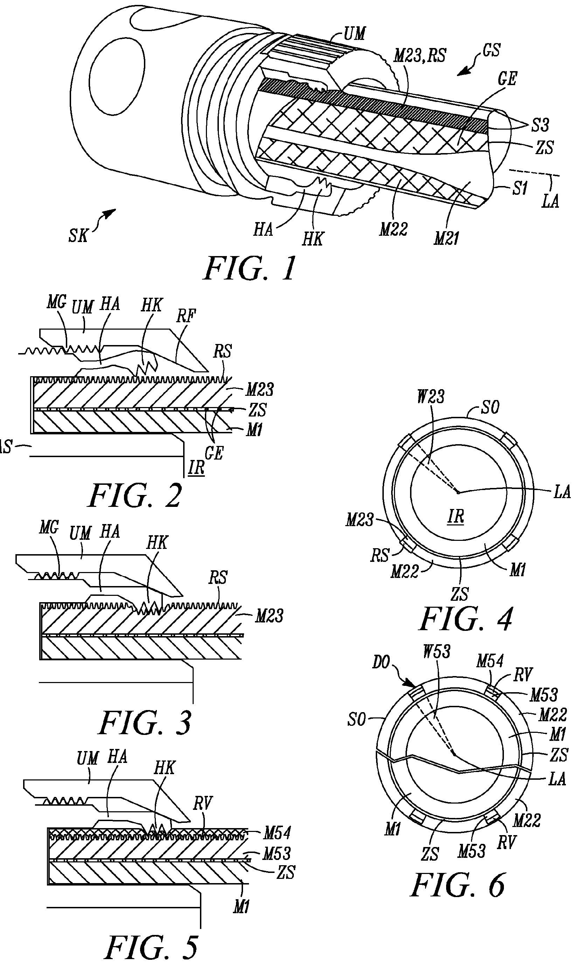

Fig. 1 zeigt in Schrägansicht ein Ende eines Gartenschlauchs GS mit einem daran gehaltenen Anschlussteil, beispielsweise einer Schlauchkupplung SK. Die Verbindung zwischen Schlauchende und Schlauchkupplung erfolgt in an sich bekannter Weise auf die Art, dass ein Grundkörper der Schlauchkupplung SK einen in Fig. 1 durch das Schlauchende verdeckten Anschlussstutzen aufweist, welcher in den Innenraum des Schlauches vom Schlauchende her eingesteckt wird. Der Schlauch ist außen umgeben von einer Mehrzahl von Halteelementarmen HA mit Haltekrallen HK, welche Bestandteil des Grundkörpers der Schlauchkupplung SK sind. Die Haltekrallen HK sind durch Verformen der Haltearme HA radial verlagerbar zwischen einer Lösestellung, in welcher das Schlauchende in Richtung der Längsachse LA des Schlauches relativ zu der Schlauchkupplung verschiebbar ist und einer Haltestellung, in welcher die Haltekrallen in die Schlauchoberfläche eingedrückt sind. Eine Überwurfmutter UM umgibt den Schlauch und ist über eine Gewindeverbindung MB auf den Grundkörper der Schlauchkupplung SK aufschraubbar. Die Überwurfmutter UM weist radial innen liegend und axial dem Grundkörper der Schlauchkupplung abgewandt in gebräuchlicher Weise eine schräge oder gekrümmte Anlagefläche auf, welche beim Aufschrauben der Überwurfmutter UM auf den Grundkörper der Schlauchkupplung die Haltekrallen HK an die Schlauchoberfläche anpresst und unter elastischer Verformung der Schlauchoberfläche die Haltekrallen in diese eindrückt. Derartige Verbindungen sind an sich gebräuchlich und beispielsweise aus dem OGS-System der Firma Gardena bekannt.

In dem in Fig. 1 dargestellten Beispiel ist der Gartenschlauch GS erfindungsgemäß mehrlagig ausgebildet mit einer inneren Mantelschicht, welche durch ein Gewebe GE umgeben und gegen Aufweitung stabilisiert ist. Das Gewebe GE sei in eine Zwischenschicht ZS eingebettet oder selbst als eine solche betrachtet. Über dem Gewebe ist eine zweite Mantelschicht aufgebracht, in deren nach außen weisender Fläche erfindungsgemäß eine Reliefstruktur ausgebildet ist.

Die Reliefstruktur weist Erhöhungen und/oder Vertiefungen gegen eine kreiszylindrische Fläche um die Längsachse LA des Schlauches auf, wobei eine solche kreiszylindrische Fläche insbesondere durch eine den überwiegenden Anteil der nach außen weisenden Fläche der Mantelschicht bildende glatte, nicht durch eine Relief strukturierte Fläche bestimmt sein kann.

In dem in Fig. 1 dargestellten Beispiel bildet ein zweites Material M22, welches im Beispielsfall als Transparent angenommen sei, den größten Flächenanteil an der nach außen weisenden Fläche der zweiten Mantelschicht.

Eine erfindungsgemäß vorgesehene Reliefstruktur RS ist in dem in Fig. 1 dargestellten Ausführungsbeispiel in Streifen S3 aus einem dritten Material M23 gegeben, welche in Umfangsrichtung das zweite Material M22 unterbrechen und in Umfangsrichtung einzelne Abschnitte der zweiten Mantelschicht bilden. Vorzugsweise sind über den Umfang verteilt mehrere der das zweite Material M22 unterbrechenden Streifen S3 in Umfangsrichtung gegeneinander versetzt vorgesehen. Im skizzierten Beispiel seien vier Streifen S3 vorgesehen.

Ein weiterer Streifen, welcher vorzugsweise in zur Längsachse LA paralleler Längsrichtung durchgehend ausgebildet ist und dessen Breite in Längsrichtung variiert, ist mit S1 bezeichnet und bestehe aus einem ersten Material M21. Der StreifenS1 diene z.B. der Aufnahme einer optisch erkennbaren Struktur für die Angabe eines Herstellers oder Schlauchtyps. Der Streifen S1 kann die Mantelschicht aus dem zweiten Material in Umfangsrichtung unterbrechen, in diese eingebettet sein oder von dieser vollständig überdeckt sein. Im skizzierten Beispiel sei angenommen, dass zwei um 180° gegeneinander versetzt angeordnete Streifen S1 aus dem ersten Material M21 mit in Längsrichtung variierender Streifenbreite vorgesehen sind und dass in Umfangsrichtung zwischen diesen Streifen aus dem ersten Material M21 jeweils zwei Streifen S3 aus dem dritten Material M23 angeordnet sind. Die gesamte Streifenanordnung weist vorzugsweise eine Achsspiegelsymmetrie bezüglich der Längsachse LA auf. Eine Reliefstruktur RS ist zumindest in Längsabschnitten der dritten Streifen S3 in deren bezüglich der Längsachse LA radial nach außen weisender Fläche ausgebildet. Die Reliefstruktur RS kann auch über die gesamte Länge der Streifen S3 durchgehend vorliegen.

Fig. 2 zeigt einen die Längsachse LA einer Anordnung nach Art der Fig. 1 enthaltenden Schnitt in schematischer Ausführung. Insbesondere die Schichtdicken der Mantelschichten und der Zwischenschicht des mehrlagigen Schlauchaufbaus sind als nicht maßstäblich anzusehen und zur Veranschaulichung gegenüber realen relativen Schichtdicken teilweise stark überhöht gezeichnet.

Die innere Mantelschicht M1 des Schlauchaufbaus bildet die Innenwand des Schlauchs um dessen Innenraum IR und liegt an dem Anschlussstutzen AS des Anschlussteils an und dichtet so die Verbindung zwischen Schlauch und Anschlussteil ab. In der radial auf die Zwischenschicht ZS mit dem Gewebe folgenden äußeren Mantelschicht ist in Fig. 2 ein Streifen S3 aus dem dritten Material M23 der äußeren Mantelschicht dargestellt. Die Reliefstruktur RS ist durch in Umfangsrichtung verlaufende Rippen gebildet, welche in Längsrichtung aufeinanderfolgend Erhöhungen und Vertiefungen gegen eine kreiszylindrische Fläche bilden.

In Fig. 4 ist ein Querschnitt durch den Schlauch dargestellt, bei welchem eine solche kreiszylindrische Fläche beispielsweise durch die äußere Oberfläche des den Streifen S3 umgebenden zweiten Materials M22 als kreiszylindrische Mantelfläche SO vorgegeben sei. Die Reliefstruktur RS bildet gegenüber dieser Mantelfläche SO Vertiefungen und Erhöhungen, was durch die beiden radial eng benachbarten Umfangslinien der Reliefstruktur RS in Fig. 3 angedeutet sei. Eine Reliefstruktur in dem dritten Material M23 der Streifen S3 ist beispielsweise dadurch erzeugbar, dass in geringer Entfernung hinter der Extrusionsdüse einer Extruderanordnung ein strukturiertes Werkzeug die noch weiche Oberfläche des extrudierten Materials M23 zu der Reliefstruktur verformt, bevor das Material durch weitere Abkühlung in einen formstabilen, aber noch elastisch verformbaren Zustand übergeht. Die Strukturierung einer glatt extrudierten Oberfläche ist als solche dem Fachmann bekannt.

Der Winkel, welchen ein Streifen um die Längsachse LA einnimmt, ist mit W23 bezeichnet. In Abweichung von Fig. 1 ist in Fig. 4 kein erster Streifen S1 eingezeichnet und die vier Streifen S3 sind um jeweils 90° um die Längsachse gegeneinander verdreht angeordnet.

In Fig. 2 ist eine Haltekralle HK an einem Haltearm HA in der Lösestellung dargestellt, in welcher das Schlauchende parallel zur Längsachse des Schlauchs auf den Anschlussstutzen AS des Grundkörpers der Schlauchkupplung aufgesteckt oder von diesem abgezogen werden kann. Die Gewindeverbindung MG zwischen dem Grundkörper der Schlauchkupplung und der Überwurfmutter ist im wesentlichen gelöst und die Haltekralle HK liegt an einem radial großen Flächenabschnitt einer konischen Rampenfläche der Überwurfmutter an.

Wenn ausgehend von Fig. 2 die Überwurfmutter UM auf den Grundkörper der Schlauchkupplung aufgeschraubt wird und die Gewindeverbindung MG in zunehmendem Gewindeeingriff tritt, wird die Haltekralle HK durch die an dieser entlang gleitende Rampenfläche RF radial auf die Schlauchoberfläche zu gedrückt und die Spitzen der Haltekrallen HK, welche sich als Schneiden in Umfangsrichtung um die Längsachse LA des Schlauches erstrecken, greifen in die Außenfläche des Schlauchs ein.

Dabei ergibt sich, wie in Fig. 3 dargestellt, im Bereich der Reliefstruktur RS der Streifen S3 ein Eingriff der Haltekrallen in die Schlauchoberfläche zum Teil als Verlagerung der Schlauchoberfläche radial nach innen durch elastische Kompression des Materials M23 oder, wegen vorzugsweise großer Härte des dritten Materials M23 insbesondere der darunter liegenden Schichten, insbesondere aber als ein formschlüssiger Eingriff der Haltekrallen in die Reliefstruktur RS der nach außen weisenden Fläche der Streifen S3 aus dem dritten Material M23. Ein solcher formschlüssiger Eingriff erweist sich als die Haltekraft der Verbindung zwischen Schlauchende und Anschlussteil erheblich erhöhend, so dass auch Benutzer, welche nur eine mäßige Handkraft beim Festziehen der Überwurfmutter aufbringen können, eine gegen Abrutschen des Schlauchs von dem Anschlussteil zuverlässige Verbindung des Schlauchendes mit dem Anschlussteil herstellen können. An in Umfangsrichtung außerhalb der Streifen S3 liegenden Bereichen graben sich die Haltekrallen HK der mehreren Halteelemente in gebräuchlicher Weise allein durch elastische Verformung der Schlauchoberfläche insbesondere des zweiten Materials M22 in dieses ein.

In Fig. 5 ist in zu Fig. 3 analoger Darstellung eine weitere nicht erfindungsgemäße Ausführung dargestellt. Dabei ist eine Reliefstruktur RV der auch im Beispiel nach Fig. 2 und Fig. 3 dargestellten Art wiederum an der nach außen weisenden Seite eines dritten Materials M53 ausgebildet; welches z.B. dieselben oder ähnliche Eigenschaften wie das dritte Material M23 hat, insbesondere härter ist als die umgebenden Materialien. Das Material M54 weise eine wesentlich geringe Shore-Härte auf als das Material M53.

Bei einer solchen Schlauchausführung mit der weichen Deckschicht M54 erfolgt beim Verlagern der Haltekrallen HK von deren Lösestellung durch Aufschrauben der Überwurfmutter UM auf die Gewindeverbindung mit dem Grundkörper des Anschlussteils im wesentlichen eine elastische Verformung des weichen Deckmaterials M4 und ein teilweiser formschlüssiger oder zumindest formschlussähnlicher Eingriff der Schneiden der Haltekralle HK mit der durch die Deckschicht aus dem weichen Deckmaterial M54 überdeckten Reliefstruktur RV in dem demgegenüber härteren Material M53, an dessen nach außen weisender Fläche die Reliefstruktur RV ausgebildet ist. Der teilweise Eingriff der Haltekrallen HK ist durch das in den Vertiefungen der Reliefstruktur RV vorliegende Material M53 begrenzt. Als ein formschlussähnlicher Eingriff sei eine Situation angesehen, bei welcher die Spitzen der Haltekrallen HK noch nicht innerhalb des Außenradius der Reliefstruktur liegen, beispielsweise weil das Material M53 unter der Haltekralle HK gleichfalls durch elastische Verformung radial nach innen verschoben ist, bei welcher aber durch die leichtere Verformbarkeit des weicheren Deckmaterials M54 der radiale Abstand der Spitzen der Haltekrallen von der Reliefstruktur gegenüber der anfänglichen Dicke der Deckschicht aus dem weichen Material M54 stark verringert ist und sich eine Haltekraft ähnlich einem formschlüssigen Eingriff ergibt.

In Fig. 6 ist in zu Fig. 4 analoger Darstellung ein Schnitt durch einen Schlauch in der in Fig. 5 skizzierten Ausführung dargestellt, wobei in oberer und unterer Figurenhälfte zwei vorteilhafte Varianten unterschieden dargestellt sind.

In der in der oberen Hälfte der Fig. 6 dargestellten Variante ist die Reliefstruktur von einem Material M54 mit geringer Shore-Härte, insbesondere auch geringerer Shore-Härte als das beidseitig in Umfangsrichtung anschließende zweite Material M22, überdeckt. Das die Reliefstruktur überdeckende Deckmaterial M54 bildet über dem als streifenförmig angenommenen Material M53 mit der Reliefstruktur eine glatte Oberfläche DO, insbesondere als Teil einer kreiszylindrischen Außenfläche des Schlauches fluchtend mit der in Fig. 4 mit SO bezeichneten kreiszylindrischen Außenfläche der Mantelschicht aus dem zweiten Material M22.

Bei der in der unteren Hälfte der Fig. 5 skizzierten Variante ist wiederum eine verdeckt liegende Reliefstruktur RV an der Außenseite eines Streifens aus einem relativ harten dritten Material M53 ausgebildet , welche in dieser Variante durch eine dünne Deckschicht aus die gesamte Oberfläche des Schlauchs bildendem Material überdeckt ist, wobei das Material der Deckschicht insbesondere auch durch das zweite Material M22 gebildet sein kann.

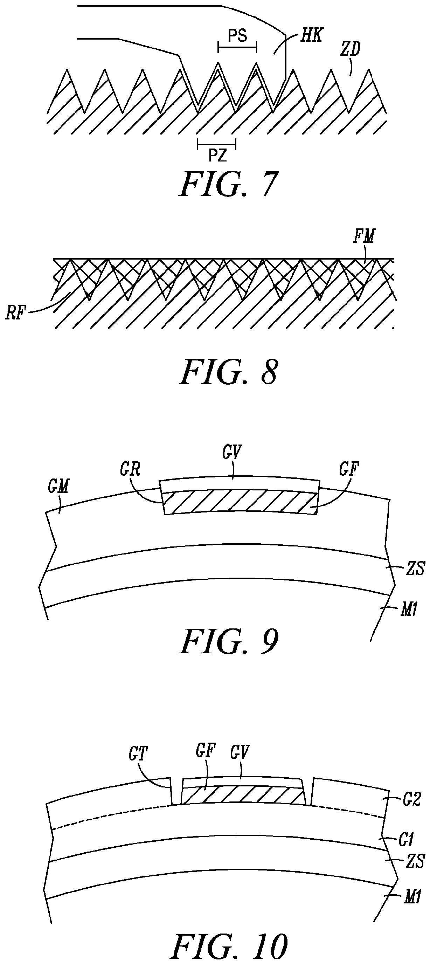

Fig. 7 zeigt eine Ausführung einer Reliefstruktur ZD, bei welcher die aufeinander folgenden Erhöhungen und Vertiefungen in der Schnittdarstellung eine zumindest annähernd dreieckförmige Gestalt aufweisen. Die Winkel der Dreieckform sowie die Periodenlänge PZ der in Längsrichtung periodischen Reliefstruktur stimmen in diesem Ausführungsbeispiel im wesentlichen mit den Winkeln der Haltekralle und deren Periodenstruktur PS der mehreren Schneiden der Haltekralle überein. Auf diese Weise ergibt sich ein besonders tiefer Eingriff der Haltestruktur der Haltekralle in die Reliefstruktur des Schlauches und eine besonders hohe Haltekraft und Stabilität der Reliefstruktur bzw. des formschlüssigen Eingriffs.

Fig. 8 zeigt ein nicht erfindungsgemäßes Beispiel, bei welchem eine Reliefstruktur RF in einem Material großer Shore-Härte im wesentlichen bündig mit den radial außen liegenden Enden der Reliefstruktur mit einem Füllmaterial FM mit gegenüber dem Material der Reliefstruktur RF wesentlich geringerer Shore-Härte aufgefüllt ist. Die bündige Auffüllung mit dem Füllmaterial stellt einen Grenzfall zwischen teilweiser Füllung oder geschlossener Überdeckung nach dem Beispiel der Fig. 5 dar.

In Fig. 9 ist ein Ausschnitt aus einem Schlauchmantel dargestellt, bei welcher radial außerhalb der Zwischenschicht ZS eine äußere Mantelschicht als geschlossen umlaufende Schicht die Zwischenschicht vollständig überdeckt. In der nach außen weisenden Fläche dieser äußeren Mantelschicht GM ist eine senkrecht zur Zeichenebene der Fig. 9 streifenförmig fortgesetzte grabenförmige Vertiefung GR ausgebildet, welche durch ein Material GF vollständig ausgefüllt ist. Das Material GF ist das eine Reliefstruktur GV aufweisende Material und besitzt vorzugsweise eine größere Shore-Härte als das umgebende Material der Mantelschicht GM. Das Material GF und das Material GM werden vorzugsweise in einem gemeinsamen Extrusionsschritt zeitgleich über verschiedene Teildüsen einer Extrusions-Düsenanordnung abgeschieden, so dass die äußere Mantelschicht einschließlich des Materials GF mit der Reliefstruktur GV gleichzeitig erzeugt wird.

Fig. 10 zeigt ein Ausführungsbeispiel, bei welchem eine radial auf die Zwischenschicht folgende äußere Mantelschicht zweilagig ausgebildet ist, wobei eine erste Teilschicht G1 als um die Zwischenschicht geschlossen umlaufende Schicht mit im wesentlichen kreiszylindrischer Außenfläche erzeugt wird und auf dieser kreiszylindrischen Außenfläche nachfolgend eine zweite Teilschicht G2 in einer Form abgeschieden wird, bei welcher die Teilschicht G2 in Umfangsrichtung an wenigstens einer, vorzugsweise mehreren Stellen unterbrochen ist, so dass in der zweiten Teilschicht ein oder mehr streifenförmige Gräben GT entstehen. Ein Material GF mit größerer Shore-Härte ist in dem oder den genannten Gräben in Streifenform erzeugt und über eine Materialverbindung an der Grenzfläche zur ersten Teilschicht G1 mit dieser ersten Teilschicht G1 mechanisch fest verankert. Das Material der zweiten Teilschicht G2 und das härtere Material GF des in dem Graben GT angeordneten Streifens mit der Reliefstruktur GV werden vorzugsweise wiederum, wie zu Fig. 9 geschildert, gleichzeitig aus einer Extrusions-Düsenanordnung mit unterschiedlichen Teildüsen und den unterschiedlichen Teildüsen zugeordneten Extrudern gleichzeitig erzeugt.

Die Erzeugung der äußeren Mantelschicht aus zwei Teilschichten G1 und G2 ermöglicht vorteilhafterweise, in der mit unterbrochener Linie angedeuteten Grenzfläche optische Strukturen vorzusehen wie beispielsweise einen Hinweis auf den Hersteller und/oder einen Schlauchtyp und durch eine solche Anordnung einer optischen Struktur einen Aufdruck auf die Außenfläche des Schlauchs zu ersetzen. Die auf diese Weise vergrabene Anordnung einer optischen Struktur ist durch die zweite Teilschicht G2 im Unterschied zu einem Aufdruck langfristig gegen Abrieb gesichert.

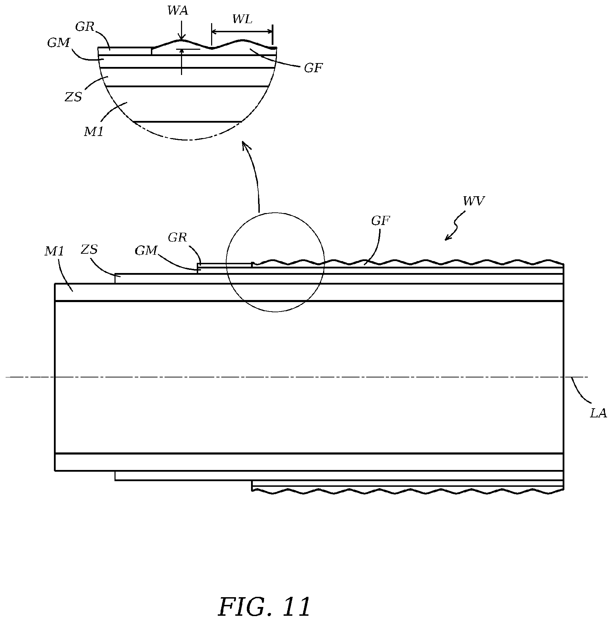

In Fig. 11 ist eine bevorzugte Ausführung mit einem Schlauchaufbau entsprechend der Fig. 9 mit einer ersten Mantelschicht M1, einer Zwischenschicht ZS und einer zweiten, äußeren Mantelschicht GM dargestellt, wobei in streifenförmig fortgesetzte, grabenförmige Vertiefungen GR ein weiteres Material GF in Streifenform abgeschieden ist, und wobei dieses weitere Material GF an seiner radial bezüglich der Schlauchmittelachse LA nach außen weisenden Seite eine Reliefstruktur WV bildet. Die Reliefstruktur WV ist in diesem Falle annähernd wellenförmig und die Reliefstruktur WV ragt zumindest teilweise, vorzugsweise zumindest überwiegend oder vollständig radial über den Rand der grabenförmigen Vertiefung GR hinaus. Hierdurch kann zum einen ein für den Benutzer besonders günstiges haptisches Gefühl der Reliefstruktur entstehen und zum anderen die Verschmutzungsanfälligkeit der Reliefstruktur in Form von sich in Ecken absetzendem Schmutz gering gehalten werden. Die Reliefstruktur ist in einem vergrößerten Ausschnitt noch detaillierter dargestellt. Vorteilhafterweise verläuft die Reliefstruktur in Längsrichtung der grabenförmigen Vertiefung bzw. des in dieser abgeschiedenen Streifens aus dem Material GF als eine in Längsrichtung fortschreitende gerundete Welle ohne Spitzen und Ecken, vorzugsweise annähernd als eine Sinusfunktion, ohne aber direkt darauf beschränkt zu sein. Die als Amplitude WA bezeichnete radiale Differenz zwischen den radial innersten und radial äußersten Positionen der wellenförmigen Reliefstruktur ist vorzugsweise kleiner als die als Wellenlänge WL bezeichnete Periodenlänge der periodisch wiederholten Struktur. Vorzugsweise beträgt die Amplitude WA maximal 40 %, insbesondere maximal 25 % der Wellenlänge WL. Der minimale Krümmungsradius der Kontur der Reliefstruktur WL in der in Fig. 11 gezeigten Darstellung beträgt vorteilhafterweise nicht weniger als 50 % der Amplitude WA.

Die Erzeugung einer Reliefstruktur GV kann wiederum in zur Erzeugung der anderen geschilderten Reliefstrukturen analoger Weise durch plastische Verformung des noch warmen Kunststoffmaterials GF hinter der Extrusionsdüse vorgenommen werden, wofür vorteilhafterweise ein mit fortgesetzter Extrusion des Schlauches auf diesem abrollendes Rad mit einer komplementären Reliefstruktur entlang des Radumfangs eingesetzt werden kann.

Die in den verschiedenen Ausführungsbeispielen dargestellten unterschiedlichen Schichtaufbauten sind auch in anderer Weise kombinierbar.

Die mehreren Streifen mit der Reliefstruktur sind, in Abweichung von der Darstellung nach Fig. 1, vorzugsweise gleichmäßig mit identischem Winkelversatz benachbarter Streifen in Umfangsrichtung verteilt angeordnet. Hierdurch wird vorteilhafterweise die Belastung durch ein die Reliefstruktur erzeugendes Werkzeug auf den Schlauch minimiert und eine Verformung des Schlauchs weitgehend vermieden. Vorzugsweise sind wie in Fig. 4 und Fig. 6 genau vier Streifen aus den härteren Material M23, M53 mit der Reliefstruktur vorgesehen.

Nicht erfindungsgemäß, kann auch die Reliefstruktur, insbesondere bei Uberdeckung durch eine Deckschicht aus einem weichen Material, vollständig um die Längsachse LA des Schlauches an der nach außen weisenden Fläche einer Mantelschicht ununterbrochen umlaufend ausgebildet sein. Die Reliefstruktur kann auch auf andere als die als bevorzugtes Beispiel beschriebene streifenförmige Anordnung in der Fläche verteilt ausgebildet sein. Anstelle der bevorzugten Rippenstruktur der Reliefstruktur können auch andere Formen einer Reliefstruktur gegeben sein.

## Patentansprüche

1. Gartenschlauch (GS) der mehrlagig mit einer inneren Mantelschicht ausgebildet ist, welche durch ein Gewebe (GE) umgeben ist, wobei das Gewebe in eine Zwischenschicht (ZS) eingebettet ist, oder selbst als eine solche Zwischenschicht ausgebildet ist, und bei der über dem Gewebe (GE) eine zweite Mantelschicht (M22) aufgebracht ist, in deren nach außen weisender Mantelfläche (SO) eine Reliefstruktur (RS) ausgebildet ist, wobei die Reliefstruktur (RS) weniger als 30 %, insbesondere weniger als 20 % der Außenseite der Mantelschicht (M22) einnimmt,
und wobei in der bezüglich der Längsachse des Schlauchs (GS) radial nach außen weisenden Oberfläche der Mantelschicht (M22) die Reliefstruktur (RS) ausgebildet ist, welche in einer zur Längsrichtung paralleler Richtung wenigstens eine radiale Vertiefung oder Erhöhung gegenüber einem gemittelten Radius der Außenseite der Mantelschicht (M22) aufweist,
**dadurch gekennzeichnet,**
**dass** die die Reliefstruktur (RS) aus einem in die Außenseite der Mantelfläche (SO) eingebetteten Material (M23) besteht.

2. Gartenschlauch nach Anspruch 1, **dadurch gekennzeichnet, dass** die Reliefstruktur (RS) in Längsrichtung aufeinander folgend mehrere Erhöhungen und/oder Vertiefungen aufweist.

3. Gartenschlauch nach Anspruch 1 oder 2, **dadurch gekennzeichnet, dass** die Reliefstruktur (RS) gegen eine Einhüllendenfläche der Schlauchoberfläche vertieft angeordnet ist.

4. Gartenschlauch nach einem der Ansprüche 1 bis 3, **dadurch gekennzeichnet, dass** die Reliefstruktur (RS) in eine Mehrzahl von in der Mantelfläche (SO) voneinander beabstandeten Teilstrukturen aufgeteilt ist.

5. Gartenschlauch nach Anspruch 4, **dadurch gekennzeichnet, dass** die Teilstrukturen in Längsrichtung voneinander beabstandet angeordnet sind.

6. Gartenschlauch nach einem der Ansprüche 4 oder 5, **dadurch gekennzeichnet, dass** die Teilstrukturen periodisch aufeinanderfolgend angeordnet sind.

7. Gartenschlauch nach einem der Ansprüche 1 bis 6, **dadurch gekennzeichnet, dass** die auf eine Teilfäche der Mantelschicht (M22) beschränkte Reliefstruktur (RS) aus einem Material besteht, welches von dem Material der übrigen Mantelschicht (M22) verschieden ist.

8. Bewässerungs-Schlauchsystem mit einem Gartenschlauch (GS) nach Anspruch 1 sowie mit wenigstens einem an einem Schlauchende anordenbaren Anschlussteil (SK), wobei das Anschlussteil (SK) einen in den Innenraum des Schlauchs (GS) einsteckbaren Stutzen und mit Haltestrukturen gegen die Oberfläche des Schlauchs (GS) pressbare Halteelemente (HK) aufweist und wobei die Haltestrukturen der Halteelemente (HK) und Reliefstruktur (RS) des Schlauchs (GS) zumindest abschnittsweise annähernd komplementär zueinander geformt sind.

## Claims

1. Garden hose (GS), which is formed in multiple layers with an inner casing layer, which is surrounded by a fabric (GE), wherein the fabric is embedded in an intermediate layer (ZS) or is itself formed as such an intermediate layer, and in which a second casing layer (M22) is applied over the fabric (GE), in which a relief structure (RS) is formed in the outwardly facing outer surface, wherein the relief structure (RS) covers less than 30%, in particular less than 20%, of the outer surface of the casing layer (M22), and wherein the relief structure (RS) is formed in the surface of the casing layer (M22) facing radially outwards with respect to the longitudinal axis of the hose (GS), which has, in a direction parallel to the longitudinal direction, at least one radial recess or elevation relative to an averaged radius of the outer side of the casing layer (M22),
**characterized in**
**that** the relief structure (RS) consists of a material (M23) embedded in the outer side of the outer surface (SO).

2. Garden hose according to claim 1, **characterized in that** the relief structure (RS) has a plurality of elevations and/or recesses arranged in longitudinal direction in succession.

3. Garden hose according to claim 1 or 2, **characterized in that** the relief structure (RS) is arranged recessed against an envelope end surface of the hose surface.

4. Garden hose according to any one of claims 1 to 3, **characterized in that** the relief structure (RS) is divided into a plurality of substructures spaced apart from one another in the outer surface (SO).

5. Garden hose according to claim 4, **characterized in that** the partial structures are arranged spaced apart from one another in longitudinal direction.

6. Garden hose according to any one of claims 4 or 5, **characterized in that** the substructures are arranged periodically in succession.

7. Garden hose according to any one of claims 1 to 6, **characterized in that** the relief structure (RS) limited to a partial surface of the casing layer (M22) consists of a material, which is different from the material of the remaining casing layer (M22).

8. Irrigation hose system with a garden hose (GS) according to claim 1 and with at least one connecting part (SK) which can be arranged at one end of the hose, wherein the connecting part (SK) has a connecting piece, which can be inserted into the interior of the hose (GS) and retaining elements (HK), which can be pressed with retaining structures against the surface of the hose (GS), and wherein the retaining structures of the retaining elements (HK) and the relief structure (RS) of the hose (GS) are shaped approximately complementarily to one another in at least sections.

## Revendications

1. Tuyau d'arrosage (GS) constitué de plusieurs couches avec une couche d'enveloppe interne qui est entourée d'un textile (GE), ce textile étant incorporé dans une couche intermédiaire (ZS) ou étant lui-même constitué sous la forme d'une telle couche intermédiaire, et pour laquelle une deuxième couche d'enveloppe (M22) est agencée au-dessus du textile (GE), la surface d'enveloppe (SO) orientée vers l'extérieur de laquelle présente une structure en relief (RS), la structure en relief (RS) occupant moins de 30%, en particulier moins de 20% de la face extérieure de la couche d'enveloppe (M22), et la structure en relief (RS) étant formée dans la surface orientée vers l'extérieur de la couche d'enveloppe (M22) dans le sens radial par rapport à l'axe longitudinal du tuyau (GS), laquelle structure en relief présente, dans une direction parallèle à la direction longitudinale, au moins un renfoncement ou une saillie radial par rapport à un rayon moyen de la face extérieure de la couche d'enveloppe (M22),
**caractérisé en ce que**,
la structure en relief (RS) se compose d'un matériau (M23) incorporé dans la face extérieure de la surface d'enveloppe (M23).

2. Tuyau d'arrosage selon la revendication 1, **caractérisé en ce que** la structure en relief (RS) présente plusieurs saillies et/ou renfoncements agencés les uns à la suite des autres dans le sens longitudinal.

3. Tuyau d'arrosage selon la revendication 1 ou 2, **caractérisé en ce que** la structure en relief (RS) est agencée en profondeur contre une surface d'extrémité d'enveloppe de la surface du tuyau.

4. Tuyau d'arrosage selon l'une des revendications 1 à 3, **caractérisé en ce que** la structure en relief (RS) se subdivise en une multitude de structures partielles agencées à distance les unes des autres dans la surface d'enveloppe (SO).

5. Tuyau d'arrosage selon la revendication 4, **caractérisé en ce que** les structures partielles sont agencées à distance les unes des autres dans le sens longitudinal.

6. Tuyau d'arrosage selon l'une des revendications 4 ou 5, **caractérisé en ce que** les structures partielles sont agencées les unes à la suite des autres à distance régulière.

7. Tuyau d'arrosage selon l'une des revendications 1 à 6, **caractérisé en ce que** la structure en relief (RS) limitée à une surface partielle de la couche d'enveloppe (M22) se compose d'un matériau qui est différent du matériau du reste de la couche d'enveloppe (M22).

8. Système de tuyau d'irrigation équipé d'un tuyau d'arrosage (GS) selon la revendication 1, ainsi que d'au moins une pièce de raccordement (SK) pouvant être agencée sur une extrémité de tuyau, la pièce de raccordement (SK) présentant un embout enfichable à l'intérieur du tuyau (GS) et des éléments de retenue (HK) pouvant être pressés contre la surface du tuyau (GS) au moyen de structures de retenue et les structures de retenue des éléments de retenue (HK) et la structure en relief (RS) du tuyau (GS) étant formées de manière approximativement complémentaires les unes par rapport aux autres au moins par portions.
